# EUROPÄISCHE PATENTSCHRIFT

(11) **EP 2 684 659 B1**
(45) Veröffentlichungstag und Bekanntmachung des Hinweises auf die Patenterteilung: **06.05.2015**
(21) Anmeldenummer: 12176249.6
(22) Anmeldetag: 13.07.2012
(51) Int. Cl.: B28B 7/20, B28B 7/30, B29C 33/50

(54) **Hinterschneidungswerkzeug und Verfahren zur Erzeugung eines Sacklochs**
Undercutting tool and method for creating a blind hole
Outil de contre-dépouille et procédé destinés à la production d'un trou borgne

(43) Veröffentlichungstag der Anmeldung: 15.01.2014
(73) Patentinhaber: Gruß, Christoph, 07768 Gumperda (DE)
(72) Erfinder: Gruß, Christoph, 07768 Gumperda (DE)
(74) Vertreter: Geyer, Fehners & Partner

(56) Entgegenhaltungen:
- DE-B- 1 238 829
- FR-A- 1 127 879
- JP-A- 6 262 613
- JP-A- 2009 101 611

## Beschreibung

### Gebiet der Erfindung

Die Erfindung betrifft ein Hinterschneidungswerkzeug zur Erzeugung eines Sackloches in fließfähigen, aushärtbaren Gemengen.

### Stand der Technik

Im Stand der Technik ist eine Vielzahl von Produkten bekannt, die aus fließfähigem, aushärtbarem Gemenge hergestellt werden. Beispiele für solche Gemenge sind Tonmischungen, aus denen beispielsweise im industriellen Bereich Dachziegel oder Steine hergestellt werden, welche aber auch im künstlerisch-ästhetischen Bereich eingesetzt werden, um beispielsweise keramische Produkte wie Tassen etc. zu schaffen. Ein anderes Beispiel für ein solches Gemenge ist Beton, aus dem sich Dachsteine, Bahnschwellen, Mauersteine, Fertigteile und eine Vielzahl von anderen Produkten fertigen lassen. Auch einige Kunststoffmischungen, beispielsweise auf Polyurethan-Basis gehören zu den Werkstoffen, die erst geformt werden und anschließend, wie auch die Ton- und Betonmischungen ausgehärtet werden, um den geformten Gegenstand dauerhaft auch ohne umschließende Form beständig werden zu lassen. Die oben erwähnten Kunststoffe werden erwärmt, Tonmischungen werden gebrannt, der Beton mit Zement abgebunden und - zumindest bei Fertigteilen und Steinen - durch Rütteln verdichtet. Durch diese chemischen und physikalischen Prozesse wird den Gemengen das Wasser entzogen bzw. in ihnen gebunden, wodurch sie aushärten, die Verdichtung bei Betongemengen führt zu einer Umlagerung der Körner im Gemenge. Die Fließfähigkeit ist dabei unterschiedlich, bei Tonmischungen in der Regel eher gering, da diese beispielsweise als "Batzen" in Pressformen gegeben werden und beim Entfernen aus der Form vor der Aushärtung schon eine gewisse Festigkeit aufweisen, die eine erneute Verformung der geometrischen Gestalt verhindern, nicht zuletzt da beim Pressen auch der Wasseranteil in der Tonmischung verringert wird. Beton weist in der Regel eine höhere Fließfähigkeit als die Tonmischungen auf, bestimmte Sorten weisen jedoch nach dem Verdichten eine Grünstandfestigkeit auf und verformen sich nach Entfernen der Schalung ebenfalls nicht. Kunststoffe weisen je nach Art hohe oder niedrige Viskositäten auf, können also auch teilweise in Gießformen verwendet werden.

Um an Steinen, Ziegeln, und anderen Gegenständen, die auf die oben beschriebene Weisen hergestellt werden, weitere Elemente befestigen zu können, werden zumeist in jene Gegenstände nach ihrer Aushärtung gerade Sacklöcher gebohrt bzw. werden solche Sacklöcher vor der Aushärtung durch entsprechende fest angeordnete Elemente an den Formen, in denen die Gemenge - beispielsweise durch Gießen oder Pressen - zu Gegenständen geformt werden, in das noch auszuhärtende Gemenge eingebracht. Die an den Gegenständen anzubringenden Elemente - wie beispielsweise Gewindestangen, Befestigungsmodule, Schrauben, oder Haken an Tonendprodukten oder Betonfertigteilen - werden dann mittels Spreizdübeln und/oder Verklebung in den Sacklöchern befestigt.

Die Verwendung von Dübeln oder Klebetechnik ist notwendig, da es sich um gerade Löcher handelt. Besseren Halt bieten hier konisch geformte Sacklöcher, die sich zur Öffnung verjüngend ausgebildet sind. Bei solchen Löchern lässt sich über geeignet geformte Verbindungsstücke, die in das Sackloch einrasten und das Sackloch möglichst vollständig ausfüllen auf zusätzliche Hilfsmittel wie Dübel oder Verklebung verzichten. Solcherart ausgebildete Sacklöcher lassen sich im Stand der Technik nur mit aufwendigen Bohrtechniken herstellen, oder indem in das Gemenge entsprechende Platzhalter eingesetzt werden, die nach dem Aushärten des Endprodukts mechanisch oder anders wieder aus dem Endprodukt entfernt werden. Beispielsweise können Platzhalter aus einem hitzebeständigen Material in Ton oder auch Platzhalter aus Wachs in Beton eingesetzt werden. Nach der Aushärtung kann der Platzhalter dann aus dem Sackloch durch Ausfräsen entfernt werden, im Falle des Wachses ist auch ein Ausschmelzen möglich. Die nachträgliche Herstellung von Sacklöchern im ausgehärteten Gegenstand ist also in jedem Fall mit einem hohen Aufwand verbunden.

Auch ist es bekannt, während der Herstellung von Produkten aus solch formbaren Materialien in diese Sacklöcher einzubringen. In der DE 601 00 861 T2 wird eine Vorrichtung zur automatischen Herstellung einer Öffnung oder eines Hohlraumes in der Wand eines keramischen Produkts während des Formens in der Form beschrieben. Dazu wird ein verformbarer Dorn verwendet. Dieser enthält einen Hohlraum, der von außen mit einer Flüssigkeit gefüllt werden kann und dazu über eine Zuleitung verfügt. Die Hülle des Formkörpers wird durch den Druck, der über die Flüssigkeit von innen ausgeübt wird, verformt.

In der DE 30 37 177 C2 wird eine Vorrichtung beschrieben, mit der Ausnehmungen in Beton gebildet werden können, wobei jedoch Hohlkörper in Form "verlorener Hilfsteile" zurückgegriffen werden muss, die nach dem Aushärten im Beton verbleiben. Zwischen einem solchen Hilfsteil und der Oberfläche soll ein Sackloch mit geraden Wänden ausgebildet werden. Dazu wird ein Stopfen in dem Hohlkörper verspannt, beispielsweise mittels einer Schraubverbindung. Die in der DE 30 37 177 C2 beschriebene Vorrichtung erleichtert das Entfernen des Stopfens nach dem Aushärten, indem dieser aus einem elastischen Material besteht, welches beim Lösen der Verspannung sich in der Länge ändert, weil es beispielsweise vorher komprimiert worden war. Dabei wird seine Ausdehnung im Querschnitt jedoch geringer, was das Herausziehen erleichtert.

Der JP 2009 101611 A offenbart ein Hinterschneidungswerkzeug zur Erzeugung eines Sackloches in fließfähigen, aushärtbaren Gemengen, umfassend
- einen entlang einer Wirkrichtung verschiebbar gelagerten Dorn,
- einen Mantel aus einem unter Druck reversibel verformbaren Material, der den Dorn zwischen Verbindungsstück und Abdeckkappe nach außen hin vollständig umschließt,
- wobei der Mantel um den Dorn herum mindestens einen Hohlraum mit einer definierten Geometrie aufweist,
- wobei die Geometrie des Hohlraums derart vorgegeben ist, dass sich der Mantel unter Druckeinwirkung entlang der Wirkrichtung im Bereich des Hohlraums lokal auswölbt, wodurch im den Mantel umgebenden Gemenge ein Sackloch mit einer dem Mantel im ausgewölbten Zustand entsprechenden Form ausbildbar ist.

### Beschreibung der Erfindung

Aufgabe der Erfindung ist es daher, ein Hinterschneidungswerkzeug zu entwickeln, mit dem der Aufwand zur Erzeugung von Sacklöchern, insbesondere von mindestens teilweise konisch geformten Sacklöchern mit sich zur Öffnung hin verjüngender Form, verringert werden kann.

Diese Aufgabe wird durch ein Hinterschneidungswerkzeug zur Erzeugung eines Sackloches in fließfähigen, aushärtbaren Gemengen gemäß Anspruch 1 gelöst; wobei
- Das Hinterschneidungswerkzeug umfasst ein Verbindungsstück zur Verbindung des Werkzeugs mit einer Form. Das Verbindungsstück kann beispielsweise mit einem Gewinde versehen sein, so dass das Hinterschneidungswerkzeug in eine Form eingeschraubt werden kann. Aber auch eine Befestigung über Bolzen oder eine Verspannung lassen sich bei entsprechender Ausgestaltung mit dem Verbindungsstück realisieren, wobei an der jeweiligen Form, beispielsweise einer Gießform oder einer Pressform, entsprechende Aufnahmemöglichkeiten für das Hinterschneidungswerkzeug mit seinem Verbindungsstück vorgesehen sein müssen.
- Im Verbindungsstück des Hinterschneidungswerkszeugs ist ein entlang einer Wirkrichtung verschiebbar gelagerter Dorn angeordnet, wobei er bei einem einstückig mit der Form gefertigten Verbindungsstück somit unmittelbar in einer Öffnung der Form geführt wird. Die Wirkrichtung korrespondiert in der Regel zur Längs- und ggf. Symmetrieachse des Sackloches, bei Verwendung einer Pressform kann sie mit einer Pressrichtung zusammenfallen. Die Wirkrichtung ist dabei in das Innere der Form gerichtet. Der Dorn kann aus den verschiedensten Materialien gefertigt sein, die stabil genug sind, um den Herstellungsprozess des Produktes unbeschadet zu überstehen, beispielsweise aus Metall, Kunststoff, Glas, Holz oder ähnlichen Materialien.
- Der Dorn wird in Wirkrichtung von einer Abdeckkappe abgedeckt. Diese dient zum einen dem Schutz des Dorns, zum anderen aber auch der Verdrängung des Gemenges um den Dorn herum bei Erzeugung des Sackloches.
- Außerdem umfasst das Hinterschneidungswerkzeug insbesondere auch einen Mantel aus einem unter Druck reversibel verformbaren Material, welcher den Dorn zwischen Verbindungsstück und Abdeckkappe nach außen hin vollständig umschließt, so dass kein Gemenge an den Dorn gelangt. Wesentliche Eigenschaft des Mantels ist dabei die reversible Verformbarkeit unter Druck, wobei der Druck entlang der Wirkrichtung aufgebaut wird. Dazu kann der Mantel beispielsweise aus einem elastisch verformbaren Kunststoff, Silikon oder Kautschuk gefertigt sein. Im Querschnitt ist der Mantel in der Regel kreisförmig, aber auch davon abweichende Formen wie eine elliptische oder polygonale Form oder eine Kombination solcher Formen sind möglich. Auch asymmetrische oder beliebige andere Formen sind für den Querschnitt möglich, da das Werkzeug im Gemenge nicht wie übliche Bohrer gedreht wird.
- Schließlich weist der Mantel um den Dorn herum mindestens einen Hohlraum mit einer definierten Geometrie auf. Die Geometrie des Hohlraums ist dabei derart vorgegeben, dass sich der Mantel unter Druck entlang der Wirkrichtung - wenn also der Dorn durch eine äußere Krafteinwirkung verursacht relativ zum Verbindungsstück so bewegt wird, dass die Abdeckkappe sich dem Verbindungsstück nähert - im Bereich des Hohlraums lokal auswölbt, wodurch im dem Mantel umgebenden Gemenge ein Sackloch mit einer dem Mantel im ausgewölbten Zustand entsprechenden Form ausbildbar ist. Aufgrund des Hohlraums ist der Mantel an dieser Stelle von geringerer Dicke oder Dichte als im Bereich des Verbindungsstücks, wo der Mantel direkt am Dorn anliegt. Wird der Dorn nun so bewegt, dass sich die Abdeckkappe in Richtung des Verbindungsstücks bewegt, also entgegen der Wirkrichtung aus der Form heraus, so wird der Mantel an der Stelle, wo sich der Hohlraum befindet, stärker verformt, es bildet sich an dieser Stelle eine Wulst mit einem größeren Durchmesser als ihn der Mantel im Bereich des Verbindungsstücks aufweist.

Die Elastizität des Materials des Mantels kann speziell auf die Eigenschaften, insbesondere auf die Fließeigenschaften des auszuhärtenden Gemenges abgestimmt werden, beispielsweise indem die Shore-Härte des verformbaren Materials entsprechend, beispielsweise in einem Bereich zwischen 15 Shore und 90 Shore, gewählt wird. An die Oberflächenbeschaffenheit des Mantels werden keine besonderen Anforderungen gestellt, sie kann glatt, gerieft, genarbt oder anderweitig aufgeraut sein um eine möglichst geringe Haftung des zu bearbeitenden Gemenges am Mantel zu erreichen.

Zweckmäßig sind Mantel, Dorn und/oder Abdeckkappe auswechselbar ausgestaltet. Die Abdeckkappe kann beispielsweise auf den Dorn aufgeschraubt sein, der Mantel kann bei entfernter Abdeckkappe beispielsweise einfach auf den Dorn aufgeschoben werden.

In einer besonders bevorzugten Ausgestaltung des Hinterschneidungswerkzeuges ist der Mantel im in Wirkrichtung hinteren Bereich beim Verbindungsstück sich in Wirkrichtung verjüngend ausgestaltet, unter Druckeinwirkung in Wirkrichtung ist so eine Ausschalschräge ausbildbar. Dies erleichtert zum einen das Entfernen des Hinterschneidungswerkzeuges, zum anderen aber auch das Einsetzen von Einrastmitteln von im Sackloch zu befestigenden Elementen. Die Ausschalschräge kann beispielsweise kegelstumpfartig mit einem Neigungswinkel zwischen 5° und 60° ausgebildet sein, wobei der Neigungswinkel auch davon abweichen kann, wenn es die Konsistenz des Gemenges zulässt oder erfordert. Alternativ kann die Ausschalschräge auch in Form einer Krümmung ausgestaltet sein, wobei die Krümmung einen konstanten oder variierenden Krümmungsradius aufweisen kann, oder eine Kombination davon, oder auch eine Kombination mit geraden Abschnitten.

Der Dorn kann im Verbindungsstück frei beweglich sein, er kann aber auch federnd gelagert sein oder, falls es der Herstellungsprozess erfordert, auch in Wirkrichtung angetrieben verschiebbar sein, beispielsweise elektromotorisch, pneumatisch oder hydraulisch.

Die Form des Sackloches wird dabei im wesentlichen durch die Geometrie des Hohlraums bestimmt und kann durch den Druck leicht variiert werden. In Abhängigkeit von der Geometrie ist das Sackloch beispielsweise mit der Form eines Fasses, einer Birne oder eines Kegelstumpfes ausbildbar, in letzterem Fall bevorzugt mit mindestens teilweise kegelstumpfartiger Form, die sich zur Öffnung des Sackloches hin verjüngt. Der Hohlraum ist dazu bevorzugt im in Wirkrichtung vorderen Bereich des Mantels ausgebildet um den Kegelstumpf möglichst tief im Sackloch anzusiedeln. Bei der Verwendung von mehreren größeren Hohlräumen lassen sich auch komplexere Formen des Sackloches erzeugen wie Sacklöcher mit wellenförmig ausgebildeten Wänden.

Wesentlich ist allein, dass an mindestens einer Stelle des Sackloches eine Auswölbung gebildet wird, d.h. ein Bereich, in dem der Durchmesser des Sackloches größer als an seiner Öffnung ist. Dies wird durch mindestens einen entsprechend ausgebildeten Hohlraum im Mantel erreicht, der Hohlraum ist im einfachsten Fall rotationssymmetrisch in bezug auf die Längsachse des Sackloches ausgebildet. Durch diese Ausbildung lassen sich im Sackloch anzubringende Gegenstände leichter und gegen angreifende Kräfte widerstandsfähiger mit dem ausgehärteten Gegenstand verbinden, als dies bei Sacklöchern mit geraden Wänden der Fall wäre.

Das vorangehend beschriebene Hinterschneidungswerkzeug ermöglicht es, Sacklöcher mit einer Auswölbung ohne größeren Aufwand bereits in das noch fließfähige Gemenge einzubringen. Der bisher notwendige Aufwand für das nachträgliche Anbringen von Sacklöchern oder die Verwendung von Hilfskonstruktionen wie Platzhaltern oder Verschraubungen entfällt auf diese Weise.

Die Erfindung betrifft auch ein Verfahren zur Erzeugung eines Sacklochs in fließfähigen, aushärtbaren Gemengen, gemäß Anspruch 10, bei der vorteilhaft das vorangehend beschriebene Hinterschneidungswerkzeug eingesetzt wird, welches mit einer Form, beispielsweise einer Pressform verbunden ist. Das Gemenge wird dazu in eine Form gefüllt, die Form wird geschlossen und das Gemenge in der Form wird durch Pressen zu einem Rohling geformt. Dabei bewegt sich der Dorn aufgrund des von dem Gemenge ausgeübten Drucks aus einer Ausgangsstellung - die einem entspannten Mantel entspricht - entlang einer Wirkrichtung, bei einer Pressform also entgegen der Wirkrichtung in Richtung aus der Form heraus. Aufgrund dessen wölbt sich der Mantel im Bereich des mindestens einen Hohlraums lokal aus. Beim Beenden des Pressvorgangs wird die Form geöffnet, so dass sich der Dorn in seine Ausgangsstellung zurückstellt. Der Rohling wird aus der Form entfernt, im Rohling verbleibt ein Sackloch mit einer dem Mantel im ausgewölbten Zustand entsprechenden Form. Beim Pressen kann an der Öffnung des Sackloches außerdem eine Ausschalschräge ausgebildet werden. Dieses Verfahren ist beispielsweise für die Herstellung von Ziegeln oder Dachsteinen geeignet.

Analog lässt sich ein Sackloch auch bei Gemengen verwenden, die in Formen gegossen werden. Hier wird das Hinterschneidungswerkzeug unter Vorspannung eingesetzt, d.h. der Dorn wird mittels Zugkraft entgegen der Wirkrichtung ein Stück bewegt, so dass die gewünschte Auswölbung eingestellt wird, und dann verspannt. Nach dem Gussvorgang, bzw. nach dem Aushärten des gegossenen Materials wird das Werkzeug entspannt und aus der Form entfernt. Beim Entspannen nimmt der Dorn und damit auch der Mantel wieder seine Ausgangsstellung ein, wobei jedoch das Werkzeug aus der Form gedrückt wird.

Es versteht sich, daß die vorstehend genannten und die nachstehend noch zu erläuternden Merkmale nicht nur in den angegebenen Kombinationen, sondern auch in anderen Kombinationen oder in Alleinstellung einsetzbar sind, ohne den Rahmen der vorliegenden Erfindung zu verlassen.

### Kurze Beschreibung der Zeichnungen

Nachfolgend wird die Erfindung beispielsweise anhand der beigefügten Zeichnungen, die auch erfindungswesentliche Merkmale offenbaren, noch näher erläutert. Es zeigen:
Fig. 1 ein Hinterschneidungswerkzeug vor dem Einbringen in ein Gemenge,
Fig. 2 das Hinterschneidungswerkzeug im Gemenge bei der Sacklochformung und
Fig. 3 das Hinterschneidungswerkzeug nach dem Entfernen aus dem Gemenge.

### Ausführliche Beschreibung der Zeichnungen

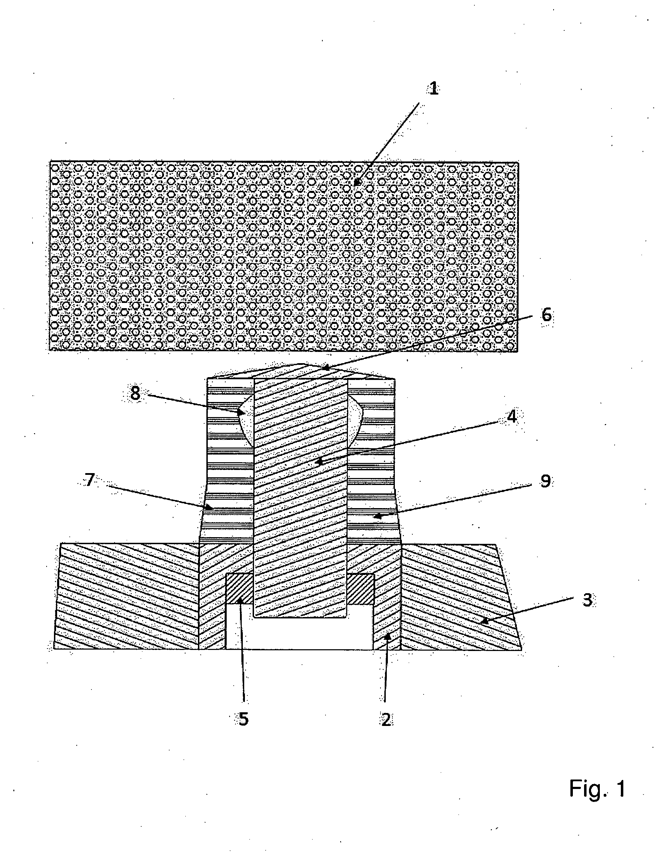

Anhand der Figuren 1 bis 3 soll die Arbeitsweise eines Hinterschneidungswerkzeuges zur Erzeugung eines Sackloches in fließfähigen, aushärtbaren Gemengen erläutert werden. Als Beispiel soll dabei das Einbringen einer Sacklochbohrung in eine Tonmischung für Dachziegel dienen, das Hinterschneidungswerkzeug ist in diesem Fall also in einer Pressform angebracht bzw. Teil einer Pressform. Dadurch kann auf einen eigenen Antrieb für das Hinterschneidungswerkzeug verzichtet werden, die Bildung des Sackloches erfolgt ausschließlich aufgrund des von der Pressform erzeugten Druckes und des vom Gemenge erzeugten Gegendruckes. Im Falle einer Gussform ist ein entsprechender Antrieb des Hinterschneidungswerkzeuges vorteilhaft.

In Figur 1 ist ein Hinterschneidungswerkzeug zur Erzeugung eines Sackloches in fließfähigen, aushärtbaren Gemengen 1, hier in einer Tonmischung, über ein Verbindungsstück 2 mit einer Form 3 verbunden. Das Verbindungsstück 2 kann beispielsweise in die Form 3 eingeschraubt sein, was eine einfache Auswechslung des Hinterschneidungswerkzeuges ermöglicht. Auch eine Verbindung über Bolzen oder eine nichtlösbare Verbindung ist denkbar. Schließlich kann das Hinterschneidungswerkzeug auch Teil der Form 3 sein, indem Verbindungsstück 2 und Form 3 einstückig gefertigt sind.

Das Hinterschneidungswerkzeug umfasst einen entlang einer Wirkrichtung im Verbindungsstück 2 verschiebbar gelagerten Dorn 4. Um eine Verkantung des Dorns 4 auszuschließen wird der Dorn 4 vorteilhaft über ein optionales Führungsstück 5 in einer Führung geführt.

In Wirkrichtung wird der Dorn 4 von einer Abdeckkappe 6 abgedeckt. Die Wirkrichtung entspricht also der Längsachse des Dorns 4 und weist von der Form 3 in Richtung des Gemenges. Die Abdeckkappe 6 ist im vorliegenden Beispiel im Längsschnitt schirmförmig mit einer Spitze in Wirkrichtung ausgebildet, wodurch das Gemenge 1 besser zur Seite gedrängt wird. Diese Form ist jedoch nicht zwingend, auch kreisbogenförmige oder polygonale Längsschnitte sind denkbare Varianten, im Extremfall kann die Abdeckkappe auch flach ausgebildet sein.

Das Hinterschneidungswerkzeug umfasst außerdem einen Mantel 7. Dieser Mantel 7 besteht aus einem unter Druck reversibel verformbaren Material und umschließt den Dorn 4 zwischen Verbindungsstück 2 und Abdeckkappe 6 nach außen hin vollständig, so dass kein Gemenge 1 an den Dorn 4 gelangt und auf diese Weise verhindert wird, dass das Werkzeug verschmutzt bzw. das Sackloch nicht korrekt ausgebildet wird. Die reversible Verformbarkeit des Materials ist eine wesentliche Eigenschaft des Mantels 7, eine andere wesentliche Eigenschaft des Mantels 7 ist, dass er im um den Dorn 4 herum mindestens einen Hohlraum 8 mit einer definierten Geometrie aufweist. Im vorliegenden Fall ist ein um die Längsachse rotationssymmetrischer Hohlraum 8 im in Wirkrichtung vorderen Bereich ausgebildet Die Geometrie des Hohlraums 8 ist so definiert, dass sich der Mantel 7 unter Druckeinwirkung entlang der Wirkrichtung - d.h. hier entgegen der Wirkrichtung, so dass Abdeckkappe und Verbindungsstück relativ zueinander aufeinander zu bewegt werden - im Bereich des Hohlraums 8 lokal auswölbt, wodurch im den Mantel 7 umgebenden Gemenge 1 ein Sackloch mit einer dem Mantel 7 im ausgewölbten Zustand entsprechenden Form ausbildbar ist. Im vorliegenden Beispiel ist das Sackloch an seinem Umfang mindestens teilweise kegelstumpfartig mit sich zur Öffnung hin verjüngender Form ausgebildet, auch andere Formen sind mit entsprechend ausgebildeten Hohlräumen herstellbar, wie beispielsweise birnenförmige Sacklöcher. Anstelle eines einzigen Hohlraumes 8 können auch mehrere oder viele kleine Hohlräume nach Art von Lufteinschlüssen im Mantel 7 angeordnet sein, auch entlang des Dorns, mit denen sich die gleiche Wirkung erzielen lässt. Im gezeigten Beispiel verjüngt sich der Durchmesser des Hohlraums 8 - unter Einschluss des Dorns 4 - in Richtung Verbindungsstück, was ebenfalls zu der kegelstumpfförmigen Ausbildung beiträgt. Diese Ausgestaltung ist jedoch nicht zwingend, wesentlich ist das Vorhandensein eines entsprechend geformten Hohlraums, der eine Auswölbung bei Komprimierung des Mantels 7 entlang der Längsachse erlaubt. Die Beschaffenheit des Hohlraumes 8 hängt auch von dem zu erwartenden Druck ab, der zwischen Form 3 bzw. Werkzeug und dem Gemenge 1 aufgebaut wird, sowie vom Material, welches für den Mantel 7 gewählt wird. Als Material für den Mantel 7 kommen beispielsweise alle unter den zu erwartenden Drücken elastisch verformbaren Materialien, wie viele Kunststoffe, Silikon oder Kautschuk in Frage. Die Shore-Härte des Mantels 7 kann dann entsprechend der Anforderungen, die an das Sackloch gestellt werden, und in Abhängigkeit von dem Gemenge und dem zu erwartenden Druck gewählt werden, bei Tonmischungen für Dachziegel lassen sich gute Ergebnisse mit elastischen Materialien mit Shore-Härten zwischen 15 und 90 erreichen.

Im gezeigten Beispiel ist der Mantel 7 im in Wirkrichtung hinteren Bereich 9 beim Verbindungsstück 2 sich in Wirkrichtung verjüngend ausgestaltet, so dass unter Druckeinwirkung in Wirkrichtung eine Ausschalschräge 10 ausbildbar ist. Dies erleichtert das Entfernen des Werkzeugs aus dem Gemenge nach Beendigung des hier beispielhaft angeführten Pressvorgangs bzw. nach dem Aushärten.

Im hier gezeigten Beispiel wird der Dorn 4 in Wirkrichtung frei geführt, er kann aber auch federnd gelagert sein, oder mittels eines gesonderten Antriebes verschoben werden, wie es beispielsweise bei Gussformen vorteilhaft ist. Der Antrieb kann mechanisch, pneumatisch, hydraulisch, elektrisch oder anderweitig erfolgen.

Die Abdeckkappe 6, der Dorn 4 und /oder der Mantel 7 können auswechselbar ausgestaltet sein, so dass sich das Werkzeug relativ schnell zerlegen lässt, wenn eine der Komponenten ausgewechselt werden muss. Die Funktion der Abdeckkappe 6 kann jedoch auch durch einen entsprechend härter ausgebildeten Bereich des Mantels 7 übernommen werden.

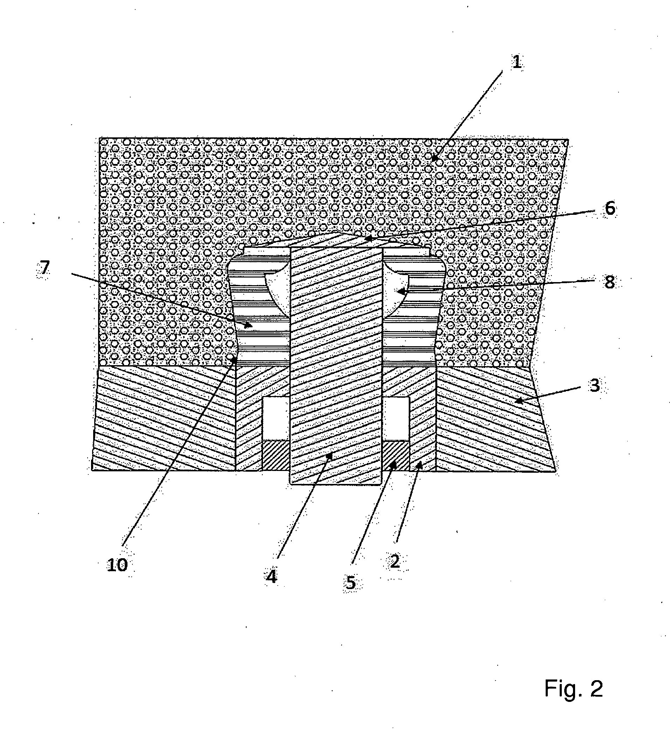

In Figur 1 ist das Hinterschneidungswerkzeug vor dem Eindringen in das Gemenge 1 gezeigt. Wird das Gemenge 1 in die Form 3 gefüllt und in der Form 3 durch diese zusammengepresst, so übt das Gemenge 1 einen Druck auf das Hinterschneidungswerkzeug aus. Da der Dorn 4 im Führungsstück 5 frei beweglich ist, versucht das Gemenge 1 den Dorn 4 aus der Form 3 zu treiben. Dabei verformt sich der Mantel 7 in der in Figur 2 dargestellten Weise, indem nämlich die Verformung im vorderen Bereich, wo sich der Hohlraum 8 befindet, stärker ist. Dort bildet sich eine Wulst aus. In Richtung der Form 3 verringert sich der Querschnitt des Hohlraums 8 dann, so dass sich die kegelstumpfartige Form ausbilden kann, die sich zur Öffnung des Sackloches hin verjüngt. Im in Wirkrichtung hinteren Bereich 9 bildet sich durch eine entsprechende Formung des Mantels 7 eine Ausschalschräge 10 aus. In der Zeichnung weist die zum Mantel 7 weisende Seite des Hohlraums 8 im Längsschnitt einen abknickenden Verlauf etwa bei der größten Ausdehnung im Querschnitt auf, dieser Knick spielt für die Lage der Auswölbung und ihrer größten Ausdehnung eine Rolle, indem die Auswölbung etwa an dieser Stelle erfolgt.

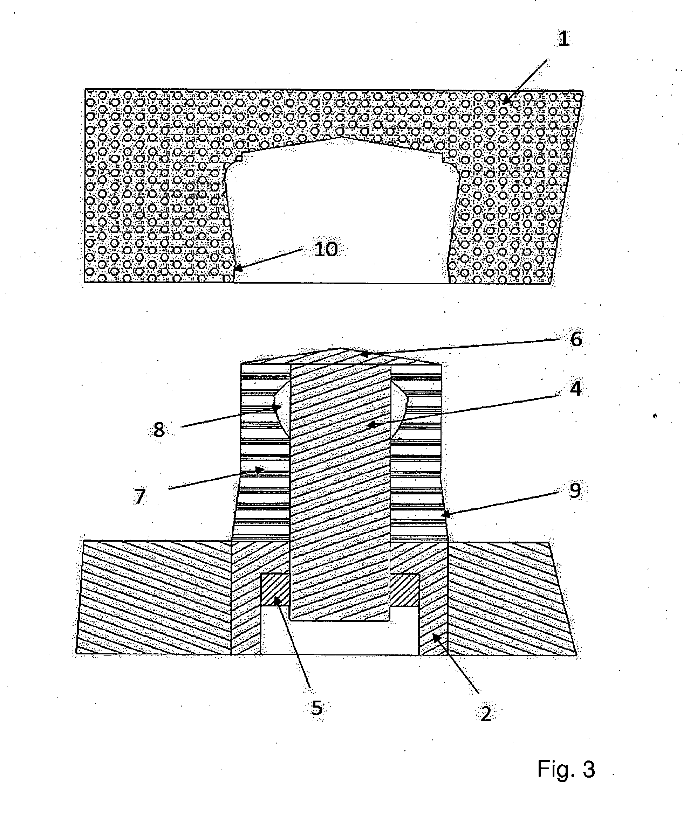

Nach Beenden des Pressvorgangs wird die Form 3 geöffnet und das Hinterschneidungswerkzeug stellt sich, wie in Figur 3 gezeigt ist, in seine Ausgangsform zurück. Im Ziegelrohling verbleibt das Sackloch in der gewünschten Geometrie, die Tonmischung kann gebrannt werden. Mittels dem vorangehend beschriebenen Hinterschneidungswerkzeugs wird das Einbringen von Sacklöchern in Gegenstände aus Ton, Beton, Feinkeramik, Porzellan oder anderen Werkstoffen erleichtert, indem das Sackloch in das aushärtbare, d.h. das noch nicht ausgehärtete Gemenge, eingebracht wird. Bei der Verwendung von Pressformen kann auf einen eigenen Antrieb oder eine Verspannung für das Werkzeug verzichtet werden.

Für die Einbringung von derartigen Sacklöchern in Gemenge, die gegossen werden und in der Form aushärten müssen, kann das Werkzeug in der Form im kontrahierten Zustand verspannt werden. Nach Aushärtung des Gemenges wird es dann entfernt, indem die Verbindung zwischen Form und Hinterschneidungswerkzeug gelöst wird, sich das Werkzeug also nach außen entspannt.

### Bezugszeichenliste

- 1: Gemenge
- 2: Verbindungsstück
- 3: Form
- 4: Dorn
- 5: Führungsstück
- 6: Abdeckkappe
- 7: Mantel
- 8: Hohlraum
- 9: hinterer Bereich
- 10: Ausschalschräge

## Patentansprüche

1. Hinterschneidungswerkzeug zur Erzeugung eines Sackloches in fließfähigen, aushärtbaren Gemengen (1), umfassend
- ein Verbindungsstück (2) zur Verbindung des Hinterschneidungswerkzeugs mit einer Form (3),
- einen entlang einer Wirkrichtung im Verbindungsstück (2) verschiebbar gelagerten Dorn (4),
- eine den Dorn (4) in Wirkrichtung abschließende Abdeckkappe (6),
- einen Mantel (7) aus einem unter Druck reversibel verformbaren Material, der den Dorn (4) zwischen Verbindungsstück (2) und Abdeckkappe (6) nach außen hin vollständig umschließt,
- wobei der Mantel (7) um den Dorn (4) herum mindestens einen Hohlraum (8) mit einer definierten Geometrie aufweist,
- wobei die Geometrie des Hohlraums derart vorgegeben ist, dass sich der Mantel (7) unter Druckeinwirkung entlang der Wirkrichtung im Bereich des Hohlraums (8) lokal auswölbt, wodurch im den Mantel (7) umgebenden Gemenge (1) ein Sackloch mit einer dem Mantel im ausgewölbten Zustand entsprechenden Form ausbildbar ist.

2. Hinterschneidungswerkzeug nach Anspruch 1, **dadurch gekennzeichnet, dass** der Mantel (7) im in Wirkrichtung hinteren Bereich (9) beim Verbindungsstück (2) sich in Wirkrichtung verjüngend ausgestaltet ist, so dass unter Druckeinwirkung in Wirkrichtung eine Ausschalschräge (10) ausbildbar ist.

3. Hinterschneidungswerkzeug nach Anspruch 2, **dadurch gekennzeichnet, dass** die Ausschalschräge kegelstumpfartig mit einem Neigungswinkel zwischen 5° und 60° ausbildbar ist, oder eine konstante oder variierende Krümmung aufweisend ausbildbar ist.

4. Hinterschneidungswerkzeug nach einem der Ansprüche 1 bis 3, **dadurch gekennzeichnet, dass** der Mantel (7) und/oder der Dorn (4) und/oder die Abdeckkappe (6) auswechselbar ausgestaltet ist.

5. Hinterschneidungswerkzeug nach einem der Ansprüche 1 bis 4, **dadurch gekennzeichnet, dass** die Shore-Härte des verformbaren Materials für den Mantel (7) auf die Eigenschaften des auszuhärtenden Gemenges (1) abgestimmt ist.

6. Hinterschneidungswerkzeug nach einem der Ansprüche 1 bis 5, **dadurch gekennzeichnet, dass** der Dorn (4) in Wirkrichtung frei geführt oder federnd gelagert ist.

7. Hinterschneidungswerkzeug nach einem der Ansprüche 1 bis 6, **dadurch gekennzeichnet, dass** der Dorn (4) in Wirkrichtung angetrieben verschiebbar ist.

8. Hinterschneidungswerkzeug nach einem der Ansprüche 1 bis 7, **dadurch gekennzeichnet, dass** in Abhängigkeit von der Geometrie des Hohlraums (8) ein Sackloch mit der Form eines Fasses, einer Zisterne, oder mit mindestens teilweise kegelstumpfartiger, sich zur Öffnung hin verjüngender Form ausbildbar ist.

9. Hinterschneidungswerkzeug nach einem der Ansprüche 1 bis 8, **dadurch gekennzeichnet, dass** der Hohlraum (8) im in Wirkrichtung vorderen Bereich des Mantels (7) um den Dorn (4) ausgebildet ist.

10. Verfahren zur Erzeugung eines Sacklochs in fließfähigen, aushärtbaren Gemengen (1) mit einem mit einer Form (3) verbundenen Hinterschneidungswerkzeug nach einem der Ansprüche 1 bis 9, bei dem
- das Gemenge (1) in eine Form (3) gefüllt, die Form geschlossen und das Gemenge (1) in der Form (3) durch Pressen zu einem Rohling geformt wird, wobei
- sich ein beweglich gelagerter Dorn (4) des Hinterschneidungswerkzeugs aufgrund von durch das Gemenge (1) beim Pressen ausgeübten Druck aus einer Ausgangsstellung heraus entlang einer Wirkrichtung bewegt, so dass sich ein Mantel (7) des Hinterschneidungswerkzeugs im Bereich mindestens eines Hohlraums (8) des Hinterschneidungswerkzeugs lokal auswölbt, und
- sich beim Beenden des Pressvorgangs der Dorn (4) in seine Ausgangsstellung zurückstellt und der Rohling aus der Form entfernt wird,
- wobei im Gemenge (1) ein Sackloch mit einer dem Mantel im ausgewölbtem Zustand entsprechender Form verbleibt.

11. Verfahren nach Anspruch 10, **dadurch gekennzeichnet, dass** beim Pressen an der Öffnung des Sackloches eine Ausschalschräge ausgebildet wird.

## Claims

1. An undercutting tool for producing a blind hole in flowable, curable batch mixtures (1), comprising
- a connecting piece (2) for connecting the undercutting tool with a mould (3),
- a plug (4) supported in the connecting piece (2) so as to be slideable along an operating direction,
- a cap (6) that covers the plug (4) in the operating direction;
- a jacket (7) that consists of a material reversibly deformable under pressure and completely encloses the plug (4) on the outside between the connecting piece (2) and the cup (6),
- the jacket (7) being provided with at least one cavity (8) that surrounds the plug (4) and has a defined geometry,
- with the geometry of the cavity being specified in such a way that the jacket (7), when under pressure exerted along the operating direction, locally bulges out in the region of the cavity (8), whereby a blind hole can be formed in the batch mixture (1) surrounding the jacket (7), the said blind hole having a shape corresponding to the jacket in its bulged-out state.

2. An undercutting tool as claimed in Claim 1, **characterized in that** the jacket (7) in its rear part (9) (as seen in the operating direction), near the connecting piece (2), is adapted to taper in the operating direction, so that, under pressure exerted in the operating direction, an flared removal neck (10) can be formed.

3. An undercutting tool as claimed in Claim 2, **characterized in that** the flared removal neck can be formed like a truncated cone with an angle of inclination between 5° and 60°, or provided with a constant or varying curvature.

4. An undercutting tool as claimed in any one of Claims 1 through 3, **characterized in that** the jacket (7) and/or the plug (4) and/or the cap (6) are/is designed to be exchangeable.

5. An undercutting tool as claimed in any one of Claims 1 through 4, **characterized in that** the Shore hardness of the deformable material of the jacket (7) is tuned to the properties of the batch mixture (1) to be cured.

6. An undercutting tool as claimed in any one of Claims 1 through 5, **characterized in that** the plug (4) is, in the operating direction, freely guided or spring-mounted.

7. An undercutting tool as claimed in any one of Claims 1 through 6, **characterized in that** the plug (4) can be slideably driven in the operating direction,.

8. An undercutting tool as claimed in any one of Claims 1 through 7, **characterized in that**, depending on the geometry of the cavity (8), a blind hole can be formed that has the shape of a barrel, a cistern or, at least partially, of a truncated cone tapered towards the opening.

9. An undercutting tool as claimed in any one of Claims 1 through 8; **characterized in that** the cavity (8) is formed around the plug (4) in the front part of the jacket (7) as seen in the operating direction.

10. A method for producing a blind hole in flowable, curable batch mixtures (1) by means of an undercutting tool as claimed in any one of Claims 1 through 9, connected with a mould (3), in which
- the batch mixture (1) is filled into a mould (3), the mould is closed, and the batch mixture (1) in the mould (3) is formed into a blank by compression,
- with a movably supported plug (4) of the undercutting tool moving from an initial position along an operating direction due to the pressure exerted by the batch mixture (1) under compression, so that a jacket (7) of the undercutting tool locally bulges out in the region of at least one cavity (8) of the undercutting tool, and
- with the plug (4) returning to its initial position at the end of the compression operation, and the blank being removed from the mould,
- with a blind hole of a shape corresponding to the jacket in its bulged-out state remaining in the batch mixture (1).

11. A method as claimed in Claim 10, **characterized in that**, during compression, a flared removal neck is formed at the orifice of the blind hole.

## Revendications

1. Outil de contre-dépouille permettant de réaliser un trou borgne dans des mélanges (1) fluides durcissables, comportant :
- une pièce de liaison (2) pour relier l'outil de contre-dépouille à un moule (3),
- un mandrin (4) monté mobile le long d'une direction de travail dans la pièce de liaison (2),
- un couvercle (6) obturant le mandrin (4) dans la direction de travail,
- une chemise (7) dans un matériau déformable sous pression de manière réversible, qui entoure le mandrin (4) complètement vers l'extérieur entre la pièce de liaison (2) et le couvercle (6),
- le chemise (7) comportant tout autour du mandrin (4) au moins une cavité (8) avec une géométrie définie,
- la géométrie de ladite cavité étant définie de telle sorte que la chemise (7) se bombe localement dans la zone de la cavité (8) sous l'effet d'une pression le long de la direction de travail, moyennant quoi un trou borgne avec une forme correspondant à la chemise à l'état bombé peut être réalisé dans le mélange (1) entourant la chemise (7).

2. Outil de contre-dépouille selon la revendication 1, **caractérisé en ce que** la chemise (7), dans la zone arrière (9), par référence à la direction de travail, sur la pièce de liaison (2) est configurée en se rétrécissant dans la direction de travail, de telle sorte que, sous l'effet d'une pression dans la direction de travail, une surface oblique de décoffrage (10) peut être réalisée dans la direction de travail.

3. Outil de contre-dépouille selon la revendication 2, **caractérisé en ce que** la surface oblique de décoffrage peut être réalisée sous forme tronconique avec un angle d'inclinaison entre 5° et 60°, ou peut être réalisée avec une courbure constante ou variable.

4. Outil de contre-dépouille selon l'une quelconque des revendications 1 à 3, **caractérisé en ce que** la chemise (7) et/ou le mandrin (4) et/ou le couvercle (6) sont réalisés de manière amovible.

5. Outil de contre-dépouille selon l'une quelconque des revendications 1 à 4, **caractérisé en ce que** la dureté Shore du matériau déformable pour la chemise (7) est ajustée aux propriétés du mélange (1) durcissable.

6. Outil de contre-dépouille selon l'une quelconque des revendications 1 à 5, **caractérisé en ce que** le mandrin (4) est guidé librement ou est logé de manière flexible dans la direction de travail.

7. Outil de contre-dépouille selon l'une quelconque des revendications 1 à 6, **caractérisé en ce que** le mandrin (4) est mobile sous l'effet d'un entraînement dans la direction de travail.

8. Outil de contre-dépouille selon l'une quelconque des revendications 1 à 7, **caractérisé en ce que**, en fonction de la géométrie de la cavité (8), il est possible de réaliser un trou borgne ayant la forme d'un fût, d'une citerne ou avec une forme au moins partiellement tronconique, se rétrécissant vers l'ouverture.

9. Outil de contre-dépouille selon l'une quelconque des revendications 1 à 8, **caractérisé en ce que** la cavité (8) est réalisée autour du mandrin (4) dans la zone avant, par référence à la direction de travail, de la chemise (7).

10. Procédé permettant de réaliser un trou borne dans des mélanges (1) fluides durcissables, au moyen d'un outil de contre-dépouille selon l'une quelconque des revendications 1 à 9, relié à un moule (3), dans lequel procédé :
- le mélange (1) est versé dans un moule (3), on ferme le moule et le mélange (1) est moulé par pressage dans le moule (3) pour former une ébauche,
- un mandrin (4), monté mobile, de l'outil de contre-dépouille étant déplacé, sous l'effet d'une pression exercée par le mélange (1) pendant le pressage, hors d'une position de départ le long d'une direction de travail, de telle sorte qu'une chemise (7) de l'outil de contre-dépouille se bombe localement dans la zone d'au moins une cavité (8) de l'outil de contre-dépouille, et
- à la fin du processus de pressage, le mandrin (4) est ramené dans sa position de départ et l'ébauche est retirée du moule,
- un trou borgne avec une forme correspondant à la chemise à l'état bombé, subsistant dans le mélange (1).

11. Procédé selon la revendication 10, **caractérisé en ce que** pendant le pressage, il se forme une surface oblique de décoffrage au niveau de l'ouverture du trou borgne.
